# EUROPÄISCHE PATENTSCHRIFT

(11) **EP 3 619 585 B1**
(45) Veröffentlichungstag und Bekanntmachung des Hinweises auf die Patenterteilung: **28.06.2023**
(21) Anmeldenummer: 18707019.8
(22) Anmeldetag: 22.02.2018
(51) Int. Cl.: E04H 4/16, G05D 1/02

(54) **VERFAHREN ZUR STEUERUNG VON REINIGUNGSGERÄTEN**
METHOD FOR CONTROLLING CLEANING DEVICES
PROCÉDÉ DE COMMANDE D'APPAREILS DE NETTOYAGE

(30) Priorität: 02.05.2017 DE 102017207341
(43) Veröffentlichungstag der Anmeldung: 11.03.2020
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); MÜLLER, Alexander, 40789 Monheim (DE); WAWER, Georg, 1040 Wien (AT); VASSILEVA, Alexandra, 40549 Düsseldorf (DE); ARTH, Clemens, 8020 Graz (AT)
(86) Internationale Anmeldenummer: PCT/EP2018/054321
(87) Internationale Veröffentlichungsnummer: WO 2018/202337

(56) Entgegenhaltungen:
- US-A1- 2003 212 472
- US-A1- 2009 194 137
- US-A1- 2014 207 280
- US-B1- 6 389 329

## Beschreibung

### Gebiet der Erfindung

Die Erfindung betrifft Verfahren und Vorrichtungen, mit welchen Reinigungsgeräte basierend auf einer bestimmten Steuerungsinformation eine Reinigung und/oder Pflege eines bestimmten Bereiches, z. B. innerhalb eines Haushalts durchführen.

### Hintergrund der Erfindung

Ein bekanntes Problem bei einer Reinigung mittels automatischer bzw. autonomer Reinigungsgeräte, wie beispielsweise Reinigungsroboter oder -drohnen, ist, dass die Reinigung oftmals kein zufriedenstellendes Ergebnis für einen Benutzer liefert.

Insbesondere ist bei dem gleichzeitigen Einsatz von mehreren automatischen bzw. autonomen Reinigungsgeräten nachteilig, dass eine Reinigung jeweils unabhängig voneinander erfolgt. Beispielsweise werden mitunter deshalb bereits gereinigte Oberflächen redundant gereinigt. Dokument US200312472 A1 beschreibt ein Multi-Roboter-System, das die Planung und Verteilung von Aufgaben verbessern soll. Dokument US2009194137 A1 beschreibt ein Verfahren zur Optimierung der Bahn eines Reinigungsroboters unter Verwendung eingebauter Sensoren.

Allgemeine Beschreibung einiger beispielhafter Ausführungsformen der Erfindung Vor dem Hintergrund des dargestellten Standes der Technik ist es somit die Aufgabe, die beschriebenen Probleme zumindest teilweise zu verringern oder zu vermeiden, das heißt insbesondere bei dem Einsatz von mehreren, d.h. mindestens zwei automatischen bzw. autonomen Reinigungsgeräten das Reinigungsergebnis zu verbessern.

Diese Aufgabe wird gegenständlich durch den Gegenstand gemäß einem der unabhängigen Ansprüche gelöst.

Gemäß einem ersten Aspekt der Erfindung wird ein Verfahren gemäß Anspruch 1 beschrieben. Das Verfahren ist beispielsweise von einer oder mehreren Vorrichtungen durchgeführt und umfasst: Erfassen von jeweils einer Positions- und/oder Orientierungsinformation von mindestens zwei Reinigungsgeräten, wobei die Positions- und/oder Orientierungsinformation indikativ für eine Position und/oder Orientierung eines Reinigungsgerätes in einem zu reinigenden und/oder zu pflegenden Bereich ist, Erfassen einer Verschmutzungsinformation, wobei die Verschmutzungsinformation indikativ für einen zu reinigenden und/oder zu pflegenden Ort oder Bereich innerhalb des zu reinigenden und/oder zu pflegenden Bereiches ist, Bestimmen einer Steuerungsinformation zumindest teilweise basierend auf den erfassten Positions- und/oder Orientierungsinformationen und auf der erfassten Verschmutzungsinformation, Ausgeben oder Veranlassen des Ausgebens der bestimmten Steuerungsinformation.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Es wird gemäß einem dritten Aspekt ferner ein beispielhaftes System beschrieben, umfassend mehrere Vorrichtungen nach dem zweiten Aspekt, insbesondere mindestens eine Verarbeitungseinheit und mindestens zwei Reinigungsgeräte, welche zusammen dazu eingerichtet sind, ein beispielhaftes gegenständliches Verfahren durchzuführen.

Gemäß einer weiteren Ausführung wird ferner ein Computerprogramm beschrieben, das Programmanweisungen umfasst, die einen Prozessor zur Ausführung und/oder Steuerung eines gegenständlichen Verfahrens veranlassen, wenn das Computerprogramm auf dem Prozessor läuft.

Zudem wird ein beispielhaftes computerlesbares Speichermedium beschrieben, welches ein beispielhaftes Computerprogramm enthält.

Eine geeignete Kombination, d.h. mindestens zwei Reinigungsgeräte (z. B. Roboter und/oder Drohne) von automatischen, insbesondere autonomen Reinigungsgeräten kann ein zufriedenstellendes Reinigungsergebnis durch eine Kooperation der mindestens zwei automatischen, insbesondere autonomen Reinigungsgeräten erreichen. Die Kooperation der mindestens zwei Reinigungsgeräte kann beispielsweise mittels einer Netzwerkschaltung, z. B. über eine drahtlose Kommunikationsverbindung, erfolgen.

Im Rahmen der vorliegenden Erfindung wird unter einem automatischen bzw. autonomen Reinigungsgerät - im Folgenden mit Reinigungsgerät bezeichnet - insbesondere ein Reinigungs- und/oder Pflegegerät verstanden, welches zumindest teilautomatisch, d.h. ohne Arbeitseinsatz eines Nutzers eine Oberfläche beispielsweise in Haushalten reinigen und/oder pflegen kann. Beispielhaft seien als Beispiele für zu reinigende und/oder zu pflegende Oberflächen in Haushalten Böden, Wände, Decken, Fenster, Teppiche, Terrassenflächen, Rasenflächen und/oder die Oberflächen von Swimmingpools genannt.

Im Rahmen der vorliegenden Erfindung wird die Verwendung einer Anzahl von verschiedenartigen in ihrer Umsetzung auf autonomen Betrieb ausgelegter Reinigungsgeräte beschrieben. Der Einsatzzweck dieser auf einen autonomen Betrieb ausgelegter Reinigungsgeräte liegt üblicherweise im Instandhalten und Reinigen von in Haushalten üblichen Oberflächen (z. B. Böden, Fenster, um einige Beispiele zu nennen), im Reinigen von Oberflächen in Swimmingpools, oder in der Pflege einer Rasenfläche. Des Weiteren kann in einer beispielhaften Ausführungsform der Erfindung nach allen Aspekten ein Verfahren zur Positions- und/oder Orientierungserkennung über eine erfasste Positions- und/oder Orientierungsinformation und Steuerung (z. B. Navigation) einzelner Reinigungsgeräte zum Einsatz kommen, um zu einem verbesserten Reinigungsergebnis eines zu reinigenden und/oder zu pflegenden Ortes oder Bereichs innerhalb eines zu reinigenden und/oder zu pflegenden Bereiches (z. B. im Haushalt und/oder Garten) zu gelangen. Ferner kann beispielsweise ein Verbrauch an Material (z. B. Reinigungs- und/oder Pflegemittel), eine Lärmbelästigung, ein Energieverbrauch und/oder ein Verschleiß der einzelnen Reinigungsgeräte optimiert werden.

Jeweils eine Positions- und/oder Orientierungsinformation von mindestens zwei Reinigungsgeräten wird erfasst. Die Positions- und/oder Orientierungsinformation sind indikativ für eine Position und/oder Orientierung eines Reinigungsgerätes in einem zu reinigenden und/oder zu pflegenden Bereich. Die Positions- und/oder Orientierungsinformation können beispielsweise von dem jeweiligen Reinigungsgerät bereitgestellt werden, z. B. weist das jeweilige Reinigungsgerät einen entsprechenden Sensor zur Erfassung der Positions- und/oder Orientierungsinformation auf. Anschließend können die jeweiligen erfassten Positions- und/oder Orientierungsinformationen von dem jeweiligen Reinigungsgerät an eine weitere Vorrichtung übermittelt werden.

Eine Verschmutzungsinformation wird erfasst. Die Verschmutzungsinformation ist indikativ für einen zu reinigenden und/oder zu pflegenden Ort oder Bereich innerhalb des zu reinigenden und/oder zu pflegenden Bereiches. Die Verschmutzungsinformation kann indikativ für eine Art und/oder Menge einer Verschmutzung sein. Der zu reinigende und/oder zu pflegende Ort oder Bereich kann beispielsweise eine in Haushalten übliche Oberfläche sein, wie beispielsweise Böden und/oder Fenster. Ferner kann der zu reinigenden und/oder zu pflegenden Bereich beispielsweise eine Oberfläche im Garten sein, wie z. B. die Wasseroberfläche von Swimmingpools, und/oder die Oberfläche von Terrassen, Balkonen oder eine Rasenoberfläche.

Eine Steuerungsinformation wird zumindest teilweise basierend auf den erfassten Positions- und/oder Orientierungsinformationen und auf der erfassten Verschmutzungsinformation bestimmt. Die Steuerungsinformation kann indikativ für eine Anweisung für eines oder mehr der mindestens zwei Reinigungsgeräte sein, so dass basierend auf der Steuerungsinformation das Reinigungsgerät eine Reinigung und/oder Pflege eines insbesondere verschmutzten und/oder ungepflegten zu reinigenden und/oder zu pflegenden Bereichs durchführt.

Die bestimmte Steuerungsinformation wird ausgegeben bzw. dessen Ausgabe veranlasst. Beispielsweise wird die Steuerungsinformation einem Benutzer auf einer Anzeigevorrichtung angezeigt, so dass dem Benutzer beispielsweise ein als zu reinigender und/oder zu pflegender Bereich identifizierter Bereich bereitgestellt wird, insbesondere visuell und/oder akustisch. Der Benutzer kann dann eine Reinigung und/oder Pflege entsprechend der auf der Anzeigevorrichtung angezeigten Steuerungsparameter durchführen, indem beispielsweise ein Reinigungsgerät durch den Benutzer entsprechend angewiesen wird. Beispielsweise können dem Benutzer auch mehrere Sätze von Steuerungsinformationen zur Verfügung gestellt werden (zum Beispiel durch eine Anzeige auf einer Anzeigevorrichtung), etwa Steuerungsinformationen für mehrere Reinigungsgeräte.

Alternativ oder zusätzlich kann die Steuerungsinformation an ein Reinigungsgerät übermittelt werden, so dass eine Durchführung einer Reinigung und/oder Pflege als Aktion ausgelöst wird. Diese Aktion kann zum Beispiel ein Reinigungsgerät, wie etwa ein Roboter und/oder eine Drohne ansteuern. Hierzu kann zum Beispiel die ermittelte Steuerungsinformation mittels einer entsprechend eingerichteten Kommunikationseinrichtung zu dem Reinigungsgerät übertragen werden, zum Beispiel mittels einer drahtgebundenen oder einer drahtlosen Kommunikationsverbindung. Die drahtlose Kommunikationsverbindung kann zum Beispiel gemäß dem Bluetooth-, Zigbee-, WAN- (z. B. LoRa oder Sigfox) oder dem WLAN-Standard ausgebildet sein. Beispielsweise kann die Steuerungsinformation an ein Reinigungsgerät übergeben werden, welches die Steuerungsinformation übernimmt und wobei der Benutzer das Reinigungsgerät lediglich starten muss. Ebenso ist es denkbar, dass das Reinigungsgerät mit der Ausgabe der Steuerungsinformation und der Übermittlung an das Reinigungsgerät die Reinigung und/oder Pflege automatisch durchführt. Das Reinigungsgerät kann beispielsweise über eine Dosierungsvorrichtung für Reinigungsmittel verfügen, um die Reinigungsmittelart und Reinigungsmitteldosierung entsprechend der Steuerungsinformation automatisch bereitzustellen. Im Ergebnis wird hiermit neben Benutzerfreundlichkeit des Verfahrens außerdem der Verbrauch von Ressourcen, wie dem zur Reinigung und/oder Pflege eingesetzten Reinigungsmittel verbessert.

In einer beispielhaften Ausgestaltung führt zumindest teilweise basierend auf der Steuerungsinformation zumindest eines der mindestens zwei Reinigungsgeräte eine Reinigung und/oder Pflege des Ortes oder des Bereiches, insbesondere automatisch, durch.

Gemäß einer beispielhaften Ausgestaltung des Verfahrens gemäß dem ersten Aspekt wird das Bestimmen der Steuerungsinformation mittels einer Verarbeitungseinheit durchgeführt und/oder gesteuert. Die Verarbeitungseinheit kann beispielsweise eine zentral im Haushalt angeordnete (z. B. installierte) Home Appliance Steuerung, wie beispielsweise ein Desktop Computer, eine zentrale Steuereinheit, ein Server, oder eine Home Automation Anlage sein. Zusätzlich oder alternativ kann die Verarbeitungseinheit ein (z. B. bewegliches) Smart Device, wie beispielsweise ein Smartphone, ein Tablet oder eine Smartwatch sein. Ferner kann die Verarbeitungseinheit eine nicht zentral im Haushalt angeordnete Home Appliance Steuerung sein, wie beispielsweise ein über eine Kommunikationsverbindung angebundener Server oder eine Server Cloud. Beispielsweise können dieser Server oder die Server Cloud über das Internet angebunden sein.

In einer beispielhaften Ausgestaltung des Verfahrens gemäß dem ersten Aspekt wird die bestimmte Steuerungsinformation über eine Kommunikationsschnittstelle ausgegeben bzw. deren Ausgabe veranlasst wird. Die Kommunikationsschnittstelle kann beispielsweise drahtlos ausgebildet sein, wie beispielsweise eine Kommunikationsschnittstelle nach dem WLAN-, Zigbee-, WAN- (z. B. LoRa oder Sigfox), Bluetooth-Standard, oder einem Mobilfunkstandard wie etwa GPRS, 3G und/oder LTE, oder aber auch drahtgebunden ausgebildet sein, wie beispielsweise eine Kommunikationsschnittstelle nach dem Ethernet-Standard. Wie bereits ausgeführt, kann beispielsweise die Steuerungsinformation an ein Reinigungsgerät über die Kommunikationsschnittstelle übermittelt werden, welche die Steuerungsinformation übernimmt und wobei der Benutzer das Reinigungsgerät lediglich starten muss. Ebenso ist es denkbar, dass das Reinigungsgerät mit der Ausgabe der Steuerungsinformation und dem Erhalten der über die Kommunikationsschnittstelle übermittelten Steuerungsinformation die Reinigung und/oder Pflege automatisch durchführt.

Gemäß einer beispielhaften Ausgestaltung des Verfahrens gemäß dem ersten Aspekt wird die Verschmutzungsinformation von einem der mindestens zwei Reinigungsgeräte erfasst. Beispielsweise kann eines der mindestens zwei Reinigungsgeräte eine Verschmutzungsinformation erfassen, beispielsweise weil sich dieses Reinigungsgerät in der Nähe der Verschmutzung befindet. Das Bestimmen der Steuerungsinformation kann nun derart zumindest teilweise basierend auf der von dem Reinigungsgerät erfassten Verschmutzungsinformation erfolgen, dass entweder das Reinigungsgerät, welches die Verschmutzungsinformation erfasst hat, die Reinigung und/oder Pflege gemäß der Steuerungsinformation der Verschmutzung als Aktion durchführt. Alternativ kann ein weiteres Reinigungsgerät, welches die Verschmutzungsinformation nicht erfasst hat, die Reinigung und/oder Pflege gemäß der Steuerungsinformation der Verschmutzung als Aktion durchführen. Dies kann beispielsweise der Fall sein, wenn das Reinigungsgerät, welches die Verschmutzungsinformation erfasst hat, nicht entsprechend der Verschmutzungsart zur Beseitigung der Verschmutzung ausgebildet ist, also beispielsweise die Verschmutzung nicht beseitigen kann. Ferner kann beispielsweise das Reinigungsgerät, welches die Verschmutzungsinformation erfasst hat, über einen niedrigen bzw. geringen Energiestatus verfügen, so dass die verbleibende Energie des Reinigungsgerätes nicht ausreicht, um die Verschmutzung zu beseitigen. Um eine möglichst schnelle Beseitigung der Verschmutzung herbeiführen zu können, kann es beispielsweise in den genannten Fällen sich anbieten, dass ein weiteres Reinigungsgerät, welches die Verschmutzungsinformation nicht erfasst hat, die Verschmutzung beseitigt.

In einer beispielhaften Ausgestaltung des Verfahrens gemäß dem ersten Aspekt wird die Steuerungsinformation ferner basierend auf einer bestimmten Planungsinformation bestimmt, wobei die Planungsinformation indikativ für prädizierte zu reinigenden bzw. zu pflegenden Orte oder Bereiche, z. B. innerhalb des zu reinigenden und/oder zu pflegenden Bereiches ist. Der zu reinigende und/oder zu pflegende Ort oder Bereich kann beispielsweise in einem Haus, in einem Garten, in einem Gebäude, oder aber auch öffentlich zugänglich, wie ein Einkaufszentrum, ein öffentlicher Platz oder dergleichen sein.

Die Planungsinformation kann beispielsweise indikativ für eine sich wiederholende, z. B. in regelmäßigen Zeitintervallen (z. B. vordefinierten Zeitintervallen) fällig werdende Reinigung und/oder Pflege sein. Die Planungsinformation kann beispielsweise von einem Benutzer bestimmt werden, beispielsweise kann die Eingabe z B. mittels eines Eingabegerätes, wie einer Tastatur, einem berührungsempfindlichen Display oder dergleichen erfolgen. Beispielsweise kann der Benutzer festlegen, dass eine oder mehrere Oberflächen in festgelegten Intervallen, beispielsweise einmal wöchentlich, täglich, oder monatlich, oder aber auch mehrmals täglich gereinigt und/oder gepflegt werden sollen. Dies kann entsprechend bei dem Bestimmen der Steuerungsinformation, basierend auf welcher beispielsweise die mindestens zwei Reinigungsgeräte eine Reinigung und/oder Pflege durchführen, berücksichtigt werden. Derart kann die Effizienz der durch die mindestens zwei Reinigungsgeräte durchgeführte Reinigung und/oder Pflege gesteigert werden.

Gemäß einer beispielhaften Ausgestaltung des Verfahrens gemäß dem ersten Aspekt wird die Planungsinformation basierend auf zumindest einem der folgenden Parameter bestimmt:
(i) Reinigungsleistung des jeweiligen Reinigungsgerätes;
(ii) Materialverbrauch des jeweiligen Reinigungsgerätes;
(iii) benötigte Zeit des jeweiligen Reinigungsgerätes zur Reinigung und/oder Pflege des zu reinigenden und/oder zu pflegenden Ortes oder Bereiches innerhalb des zu reinigenden und/oder zu pflegenden Bereiches;
(iv) Energieverbrauch des jeweiligen Reinigungsgerätes;
(v) Verschleiß des jeweiligen Reinigungsgerätes;
(vi) Geräuschentwicklung des jeweiligen Reinigungsgerätes;
(vii) oder eine Kombination hiervon.

Bei der Reinigungsleistung des jeweiligen Reinigungsgerätes kann es sich beispielsweise um einen Parameter handeln, der indikativ dafür ist, ob das Reinigungsgerät geeignete Reingungsmittel aufweist, eine vorliegende Verschmutzung zu entfernen. Beispielsweise kann ein zur Reinigung von Fenstern ausgebildetes Reinigungsgerät keine Verschmutzung von einem Teppich entfernen und vice versa.

Bei dem Materialverbrauch des jeweiligen Reinigungsgerätes kann es sich beispielsweise um ein seitens des Reinigungsgerätes zu verwendenden Reinigungsmittel und/oder Pflegemittel handeln, oder beispielsweise um einen Staubsaugerbeutel, in welchem Schmutz der von einer der mindestens zwei Reinigungsgeräte von einer Oberfläche entfernt wird, gesammelt wird, oder aber zusätzlich oder alternativ um eine Abnutzung zur Reinigung und/oder Pflege von dem jeweiligen Reinigungsgerät verwendeten Material, wie z. B. eine Bürste oder ein Reinigungstuch.

Bei dem Energieverbrauch des jeweiligen Reinigungsgerätes kann es sich beispielsweise um einen Parameter handeln, der indikativ dafür ist, wieviel Energie zur Beseitigung einer Verschmutzung von dem jeweiligen Reinigungsgerät aufzubringen ist. Hierüber kann beispielsweise eine Berechnung erfolgen, ob der Energiestatus eines jeweiligen Reinigungsgerätes ausreichend ist, um eine Verschmutzung zu beseitigen. Entsprechend kann die Planungsinformation ferner zumindest teilweise basierend auf dem Energiestatus eines jeweiligen Reinigungsgerätes bestimmt werden.

Bei dem Verschleiß des jeweiligen Reinigungsgerätes kann es sich beispielsweise um einen Parameter handeln, welcher indikativ dafür ist, wieviel Verschleiß bei einem zur Reinigung und/oder Pflege von dem Reinigungsgerät eingesetzten Reinigungsmittel (z. B. Bürste oder Reinigungstuch) zu erwarten ist. Sollte beispielsweise ein Reinigungstuch eines Reinigungsgerätes bereits durch eine vorherige Verwendung derart verschmutzt sein, dass die Beseitigung einer weiteren Verschmutzung voraussichtlich nicht mehr zu erwarten ist, kann entsprechend die Reinigung effizienter, d.h. beispielsweise schneller erfolgen, und/oder die Reinigungsleistung unter Einsatz der mindestens zwei Reinigungsgeräte kann verbessert werden.

Bei der Geräuschentwicklung des jeweiligen Reinigungsgerätes kann es sich beispielsweise um einen Parameter handeln, welcher indikativ dafür ist, welche Geräuschentwicklung bei der Beseitigung einer Verschmutzung zu erwarten ist. Beispielsweise kann entsprechend einer von einem Benutzer vordefinierten Vorgabe festgelegt werden, dass Geräuschintensive Reinigungen und/oder Pflegen, wie beispielsweise das Staubsaugen und/oder das Rasenmähen nicht zu Uhrzeiten und/oder an Tagen erfolgt, die den Benutzer oder weitere Menschen negativ beeinträchtigen.

In einer beispielhaften Ausgestaltung des Verfahrens gemäß dem ersten Aspekt ist der zu reinigende und/oder zu pflegende Ort oder Bereich innerhalb des zu reinigenden und/oder zu pflegenden Bereiches eine Oberfläche in einem Haus (z. B. Boden, Teppich, und/oder Fenster) oder in einem Garten (z. B. Rasen, Wege, Terrassen, Balkone und/oder Swimmingpool).

Gemäß einer beispielhaften Ausgestaltung des Verfahrens gemäß dem ersten Aspekt wird zumindest das Bestimmen der Steuerungsinformation mittels einer Verarbeitungseinheit durchgeführt und/oder gesteuert, wobei die Verarbeitungseinheit insbesondere zentral im Haushalt oder dezentral angeordnet ist.

Für den Fall, dass die Verarbeitungseinheit zentral angeordnet ist, ist die Verarbeitungseinheit beispielsweise ein Home PC oder ein im Haushalt angeordneter Server oder eine im Haushalt angeordnete Server Cloud.

Für den Fall, dass die Verarbeitungseinheit dezentral angeordnet ist, ist die Verarbeitungseinheit beispielsweise innerhalb des Haushaltes (z. B. umfasst von zumindest einem Reinigungsgerät, oder umfasst von einem (z. B.beweglichen) Smart Device) oder außerhalb des Haushaltes angeordnet (z. B. umfasst von einem Server oder einer Server Cloud).

Die Anordnung der Verarbeitungseinheit kann beispielsweise eine Installation oder eine Bereitstellung als Dienst, z. B. von einem Dritten, sein.

Gemäß einer beispielhaften Ausgestaltung des Verfahrens gemäß dem ersten Aspekt wird die Positions- und/oder Orientierungsinformation mittels einer Kamera oder mittels eines Sensors erfasst wird.

Der Sensor kann beispielsweise von den jeweiligen Reinigungsgeräten umfasst sein. Der Sensor kann beispielsweise ein GPS-Sensor sein, der sich insbesondere in Außenszenarien anbietet, in denen das Bestimmen einer Positions- und/oder Orientierungsinformation mittels des GPS-Sensors sichergestellt werden kann. Der GPS-Sensor kann beispielsweise alternativ oder zusätzlich als Differential-GPS-Sensor ausgebildet sein. Der Sensor kann beispielsweise ein Beschleunigungssensor, ein Gyroskop, ein Kompasssensor oder ein Modul zur Aufnahme von Umgebungsdaten zum Zwecke der Bestimmung einer Position und/oder Orientierung eines jeweiligen Reinigungsgerätes (z. B. ein Radar- oder Lidarmodul), insbesondere in Form einer erfassten Positions- und/oder Orientierungsinformation sein.

Der Sensor kann beispielsweise ein Multisensor sein, welcher insbesondere mehrere der vorgenannten Sensoren umfassen kann. Alternativ können auch mehrere einzelne der vorgenannten Sensoren von einem jeweiligen Reinigungsgerät umfasst sein.

Die Kamera kann beispielsweise ein Kamerasensor sein. Die Kamera bzw. der Kamerasensor kann beispielsweise Bildinformationen erfassen.

In einer beispielhaften Ausgestaltung des Verfahrens gemäß dem ersten Aspekt ist die Kamera derart angeordnet, dass mittels der Kamera der zu reinigenden und/oder zu pflegenden Bereich erfasst wird, wobei zumindest teilweise basierend auf von der Kamera erfassten Informationen das Bestimmen der Positions- und/oder Orientierungsinformation der mindestens zwei Reinigungsgeräte und/oder das Erfassen der Verschmutzungsinformation durchgeführt und/oder gesteuert wird. Beispielsweise können mittels der Kamera Bildinformationen erfasst werden, wobei die Bildinformation unter Verwendung eines entsprechend adaptierten Algorithmus (z. B. eine Stereo-Vision, ein SLAM (SLAM: Self-Localization-And-Mapping), Visual Odometry Bereich um einige Beispiele zu nennen) ausgewertet werden kann. Zumindest teilweise basierend auf dieser ausgewerteten Bildinformation kann eine Positions- und/oder Orientierungsinformation von zumindest einem der mindestens zwei Reinigungsgerätes bestimmt werden. Beispielsweise kann ein SLAM Algorithmus verwendet werden. Der SLAM-Algorithmus kann optional beispielsweise unter Anwendung eines Kalman-Filters, eines Partikel-Filters, eines EM-Algorithmus, und/oder einer Graph-basierenden Technik angewendet werden, um eine möglichst genaue Positions- und/oder Orientierungsinformation bestimmen zu können.

Alle Mapping- und Orientierungs-Tools, wie beispielsweise der SLAM-Algorithmus, können beispielsweise dafür genutzt werden, lokale Karten, insbesondere von Innenräumen anzulegen. In der lokalen Karten können beispielsweise Positionsinformationen von Gegenständen - feststehende als auch bewegliche - erfasst werden. Zusätzlich können beispielsweise Bild- oder Forminformationen von Gegenständen oder Oberflächen abgelegt und den Positionsinformationen zugeordnet werden, um eine sogenannte "Inventory-Liste" anzulegen. Die "Inventory-Liste" kann beispielsweise indikativ für eine Position des Gegenstands im Innenraum sein. Zumindest teilweise basierend auf dieser "Inventory-Liste" kann beispielsweise eine Bestimmung der Steuerungsinformation erfolgen.

Gemäß einer beispielhaften Ausgestaltung des Verfahrens gemäß dem ersten Aspekt wird die Positions- und/oder Orientierungsinformation zumindest teilweise basierend auf von einem Sensor von einem der mindestens zwei Reinigungsgeräte erfassten Informationen bestimmt Der Sensor kann beispielsweise ein Beschleunigungssensor, ein Gyroskop, ein Kompasssensor oder ein Modul zur Aufnahme von Umgebungsdaten zum Zwecke der Bestimmung einer Position und/oder Orientierung eines jeweiligen Reinigungsgerätes (z. B. ein Radar- oder Lidarmodul), insbesondere in Form einer erfassten Positions- und/oder Orientierungsinformation sein.

In einer beispielhaften Ausgestaltung des Verfahrens gemäß dem ersten Aspekt umfasst das Verfahren ferner die folgenden Verfahrensschritte:
- Erfassen von zumindest einem Sprachbefehl indikativ für zumindest einen Parameter, auf dessen Basis die Steuerungsinformation bestimmt wird;
- Bestimmen der Steuerungsinformation zumindest teilweise basierend auf dem erfassten zumindest einen Sprachbefehl.

Der Sprachbefehl kann beispielsweise von einem Benutzer eingegeben werden, z. B. über eine Sprachkommunikationsschnittstelle (z. B. ein ein Mikrofon umfassendes elektronisches Gerät oder dergleichen). Der eingegebene Sprachbefehl kann beispielsweise lokal seitens der Sprachkommunikationsschnittstelle oder seitens eines Servers verarbeitet werden. Zur Verarbeitung seitens eines Servers kann der Sprachbefehl beispielsweise nach der Eingabe über eine Kommunikationsverbindung des elektronischen Gerätes an einen Server übermittelt werden. Mittels einer Spracherkennungssoftware (z.B. Apple Siri oder Amazon Echo oder dergleichen) kann der eingegebene Sprachbefehl beispielsweise verarbeitet werden. Dafür kann die Installation zusätzlicher Software erforderlich sein. Ein derart verarbeiteter Sprachbefehl kann beispielsweise in eine Steuerungsinformation umgewandelt werden, die das elektronische Gerät und/oder ein weiteres elektronisches Gerät (z. B. ein Reinigungsgerät) beispielsweise auswerten, verarbeiten, weiterleiten, oder ein sonstiger Weise benutzen kann.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektromagnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

In einer beispielhaften Ausgestaltung der Erfindung nach allen Aspekten, beispielsweise ein System, besteht eine Gruppe aus zwei oder mehr homogenen, auf einen autonomen Betrieb ausgelegte Reinigungsgeräte (z. B. Roboter und/oder Drohne) zur Reinigung von in Haushalten üblichen Oberflächen (z. B. Böden, Fenster), zum Reinigen von Oberflächen in Swimmingpools, oder zur Pflege einer Rasenfläche, welche über die Funktionalität verfügen, sich beispielsweise mittels eines Rollen- oder Raupenantriebs in einem 2-dimensionalen Raum fortzubewegen. Weitere Fortbewegungsarten sind neben den vorstehend angeführten Beispielen denkbar.

In einer weiteren beispielhaften Ausgestaltung der Erfindung nach allen Aspekten, beispielsweise ein System, besteht eine Gruppe aus zwei oder mehr homogenen, auf einen autonomen Betrieb ausgelegten Reinigungsgeräten (z. B. Roboter und/oder Drohnen) zur Reinigung von in Haushalten üblichen Oberflächen (z. B. Böden, Fenster), zum Reinigen von Oberflächen in Swimmingpools, oder zur Pflege einer Rasenfläche, welche über die Funktionalität verfügen, sich mittels eines Rückstoßantriebs, bewegenden Rotoren, magnetischen oder elektromagnetischen Feldern oder einem anderen Mechanismus in einem 3-dimensionalen Raum Fortzubewegen. Weitere Fortbewegungsarten sind neben den vorstehend angeführten Beispielen denkbar.

Jedes einzelne Reinigungsgerät (z. B. Roboter und/oder Drohne) kann beispielsweise über einen oder mehrere Sensoren verfügen, wobei die einen oder mehreren Sensoren beispielsweise einen der im folgenden angeführten Sensoren umfassen: (i) Laserdistanzmesser; (ii) Infrarot-Kamera; (iii) Graustufen-Kamera; (iv) RGB-Kamera; (v) RGBD-Kamera (Tiefenkamera); (vi) TOF (TOF: Time-of-Flight) Kamera; (vii) Widerstandssensor; (viii) Ultraschallsensor; (ix) Schmutzsensor; (x) Geruchssensor; (xi) hyperspektrale Kamera; (xii) andere Sensoren zur Aufnahme von relevanten Daten für den Reinigungs- und/oder Pflegezweck; (xiii) oder eine Kombination hiervon.

In einer beispielhaften Ausgestaltung der Erfindung nach allen Aspekten, beispielsweise ein System, kann beispielsweise jedes einzelne Reinigungsgerät (z. B. ein Roboter und/oder eine Drohne) über eine Verarbeitungseinheit verfügen, welche erfasste (z. B. aufgenommene) Informationen (z. B. Daten) analysieren und jeweils für eine Reinigung und/oder Pflege relevanten Parameter (welche beispielsweise von einer Steuerungsinformation umfasst sind) bestimmen kann. Die Verarbeitungseinheit kann beispielsweise über eine Methode zur Entscheidungsfindung über eine anzuwendende Reinigungs- und/oder Pflegeprozedur verfügen. Die Verarbeitungseinheit kann beispielsweise selbsttätig eine Reinigung und/oder Pflege eines Bereiches mit oder ohne Zugabe von Hilfsmitteln veranlassen bzw. dessen Durchführung veranlassen.

In einer weiteren beispielhaften Ausgestaltung der Erfindung nach allen Aspekten, beispielsweise ein System, können beispielsweise Information über Verschmutzungen über eine drahtlose Kommunikationseinheit (z. B. WLAN, WAN, Zigbee, Bluetooth, um einige Beispiele zu nennen) an eine zentral im Haushalt installierte Home Appliance Steuerung (z. B. einen Desktop Computer, eine zentrale Steuereinheit, einen Server, eine Home Automation Anlage, um einige Beispiele zu nennen) oder ein beispielswiese bewegliches Smart Device (z. B. ein Smartphone, ein Tablet, eine Smartwatch, um einige Beispiele zu nennen) weitergegeben werden, welche beispielsweise den Fortschritt einer Reinigungs- und/oder Pflegeprozedur anzeigen und überwachen kann.

In einer beispielhaften Ausgestaltung der Erfindung nach allen Aspekten, beispielsweise ein System, kann beispielsweise jedes Reinigungsgerät (z. B. Roboter und/oder Drohne) über keine eigene Verarbeitungseinheit verfügen, sondern lediglich über eine drahtlose Kommunikationsschnittstelle (z. B. WLAN, Zigbee, Bluetooth, um einige Beispiele zu nennen) verfügen, wobei über die drahtlose Kommunikationsschnittstelle beispielsweise erfasste (z. B. aufgenommene) Informationen (z. B. von einem oder mehreren Sensoren erfasste Sensordaten) an eine zentral im Haushalt angeordnete (z. B. installierte) Home Appliance Steuerung (z. B. z. B. einen Desktop Computer, eine zentrale Steuereinheit, einen Server, eine Home Automation Anlage, um einige Beispiele zu nennen), ein beispielswiese bewegliches Smart Device (z. B. ein Smartphone, ein Tablet, eine Smartwatch, um einige Beispiele zu nennen) übertragen werden können. Die zentral im Haushalt angeordnete Home Appliance Steuerung, oder das bewegliche Smart Device können beispielsweise eine Verarbeitung der von dem Reinigungsgerät übermittelten Informationen durchführen, beispielsweise zur Feststellung einer Präsenz oder Absenz einer Verschmutzung, zur Bestimmung der Natur der Verschmutzung, oder dergleichen. Die zentral im Haushalt angeordnete Home Appliance Steuerung, oder das bewegliche Smart Device können beispielsweise über eine Methode zur Entscheidungsfindung über eine anzuwendende Reinigungs- und/oder Pflegeprozedur verfügen, welche eine entsprechend bestimmte Reinigungs- und/oder Pflegeprozedur an das Reinigungsgerät übermitteln kann.

In einer weiteren beispielhaften Ausgestaltung der Erfindung nach allen Aspekten, beispielsweise ein System, kann beispielsweise ein einzelnes Reinigungsgerät (z. B. ein Roboter und/oder eine Drohne) über eine Reihe von Sensoren und Kommunikationsmodule, wie beispielsweise GPS (GPS: Global Positioning System), Differential-GPS, Beschleunigungsmesser, Gyroskop, Kompassmodul, WiFi, WAN, Zigbee, Bluetooth, GPRS (GPRS: General Packet Radio Service), LTE (LTE: Long Term Evolution), 3G (3G: Mobilfunksystem der dritten Generation (3G-Mobilfunksystem)), oder Module zur Aufnahme von Umgebungsdaten zum Zwecke der Orientierung und/oder Positionierung (z. B. Rader-, oder Lidar-Systeme) des jeweiligen Gerätes im jeweiligen Reinigungsbereich, oder eine Kombination hiervon verfügen. Nicht satellitengebundene Orientierungssysteme, welche insbesondere geeignet sind zur Indoor-Orientierung, sind beispielsweise bevorzugt geeignet.

In einer beispielhaften Ausgestaltung der Erfindung nach allen Aspekten, beispielsweise ein System, kann beispielsweise die Verarbeitungseinheit über einen Algorithmus zur autonomen Bestimmung der Position und/oder Orientierung des Reinigungsgerätes (z. B. Roboter und/oder Drohne) in Bezug auf sein operatives Umfeld verfügen. Beispielsweise kann unter Zuhilfenahme einer Auswahl von vorhandenen Information (z. B. von einem oder mehreren Sensoren erfassten Informationen, wie beispielsweise Messdaten) beispielsweise eines vorhandenen Kamerasensors, und unter Verwendung eines entsprechend adaptierten Algorithmus (z. B. eine Stereo-Vision, ein SLAM (SLAM: Self-Localization-And-Mapping), Visual Odometry Bereich um einige Beispiele zu nennen) eine derartige autonome Bestimmung der Position und/oder Orientierung des Reinigungsgerätes erfolgen. Entsprechend kann eine Positions- und/oder Orientierungsinformation erfasst werden. Ein SLAM Algorithmus kann optional beispielsweise unter Anwendung eines Kalman-Filters, eines Partikel-Filters, eines EM-Algorithmus, und/oder einer Graph-basierenden Technik durchgeführt werden.

Alle Mapping- und Orientierungs-Tools können beispielsweise dafür genutzt werden, lokale Karten, insbesondere von Innenräumen anzulegen. Dazu gehören beispielsweise Positionsdaten von Gegenständen, auch solchen, die beweglich sind. Zusätzlich können beispielsweise Bild- oder Formdaten von Gegenständen oder Flächen abgelegt und Positionsdaten zugeordnet werden, um eine sogenannte "Inventory-Liste" anzulegen, welche beispielsweise indikativ für eine Position des Gegenstands im Innenraum ist, und auf welcher beispielsweise zumindest teilweise basierend eine Bestimmung der Steuerungsinformation erfolgen kann.

In einer beispielhaften Ausgestaltung der Erfindung nach allen Aspekten, beispielsweise ein System, kann die Verarbeitungseinheit beispielsweise über einen Algorithmus zur Bestimmung einer Position und/oder Orientierung eines Reinigungsgerätes (z. B. Roboter und/oder Drohne) verfügen, der beispielsweise im Außenbereich zur Anwendung kommen kann. Zumindest teilweise basierend auf Informationen, beispielsweise Daten die von einem oder mehreren GPS-Sensoren, Differential-GPS-Sensoren, Beschleunigungsmessern, Gyroskopen, Kompassmodulen, oder einer Kombination hiervon erfassbar sind, kann beispielsweise die Bestimmung der Position und/oder Orientierung des Reinigungsgerätes erfolgen.

In einer weiteren beispielhaften Ausgestaltung der Erfindung nach allen Aspekten, beispielsweise ein System, kann beispielsweise insbesondere im Innenbereich eines Haushalts eine Reihe von stationär in und rund um einen Reinigungs- und/oder Pflegebereich einer oder mehrere montierte Bluetooth-Transceiver verwendet werden, wobei die Bluetooth-Transceiver jeweils beispielsweise sogenannte Bluetooth-Beacons aussenden können. Mittels einer Verarbeitungseinheit kann beispielsweise über einen Algorithmus zur Bestimmung einer Position und/oder Orientierung von mindestens zwei Reinigungsgeräten (z. B. Roboter und/oder Drohne) in Bezug auf das jeweilige operative Umfeld durch Bluetooth-Triangulation über eine unterschiedliche empfangene Signalstärke (RSS: Received Signal Strength) der ausgesendeten Bluetooth-Beacons die jeweilige Position und/oder Orientierung der jeweiligen Reinigungsgeräte bestimmt werden.

In einer beispielhaften Ausgestaltung der Erfindung nach allen Aspekten wird eine Statusinformation erhalten (z. B. bestimmt). Die Statusinformation kann beispielsweise ausgegeben werden oder deren Ausgabe veranlasst werden.

Beispielsweise kann in einem System beispielsweise jedes Reinigungsgerät (z. B. Roboter und/oder Drohne) über eine drahtlose Kommunikationsschnittstelle (z. B. WLAN, WAN, Zigbee, Bluetooth, um einige Beispiele zu nennen) zur Übertragung einer Statusinformation verfügen. Die Statusinformation kann basierend auf einer Abfrage beispielsweise an eine zentral im Haushalt installierte Home Appliance Steuerung (z. B. ein Desktop Computer, eine zentrale Steuereinheit, ein Server, eine Home Automation Anlage), und/oder ein (z. B. bewegliches) Smart Device (z. B. ein Smartphone, eine Tablet, eine Smartwatch, um einige Beispiele zu nennen) übermittelt werden. Die Statusinformation kann ausgegeben werden, z. B. einem Benutzer auf einer Anzeigevorrichtung des Smart Devices dargestellt werden.

Die Statusinformation kann beispielsweise indikativ für eine Reinigungs- und/oder Pflegeaktion ist, und optional zusätzlich indikativ für eine jeweilige Positions- und/oder Orientierungsinformation indikativ für die Position und/oder Orientierung des Reinigungsgerätes sein. Alternativ oder zusätzlich kann die Statusinformation indikativ für einen Fortschritt, Abbruch, Abschluss, Start oder einen weiteren Status eines Reinigungsvorgangs (z. B: Fensterreinigung, Bodenreinigung, Poolreinigung, oder eine Kombination hiervon) oder eines Pflegevorgangs (z. B. Rasen mähen) sein. Alternativ oder zusätzlich kann die Statusinformation indikativ für Eigenschaften des Reinigungsgerätes sein, wie z. B. Energiestatus, Materialstatus, Materialverbrauch um einige nichtlimitierende Beispiele zu nennen.

Die zentral im Haushalt installierte Home Appliance Steuerung oder das Smart Device können beispielsweise eine Erfassung der Bewegung einzelner Reinigungsgeräte über die Zeit durchführen, bzw. deren Veranlassung durchführen. Die einzelnen Reinigungsgeräte können eine entsprechende Statusinformation an die zentral im Haushalt installierte Home Appliance Steuerung und/oder das Smart Device übermitteln. Alternativ oder zusätzlich kann die zentral im Haushalt installierte Home Appliance Steuerung oder das Smart Device beispielsweise eine Positions- und/oder Orientierungsinformation von den jeweiligen Reinigungsgeräten erfassen. Mittels einer Erfassung über die Zeit können beispielsweise historischen Daten erfasst und ausgewertet werden, beispielsweise um über diese historische Daten eine Prädiktion oder dergleichen bestimmen zu können, um das mittels der Reinigungsgeräte zu erzielende Reinigungsergebnis weiter verbessern zu können. Die zentral im Haushalt installierte Home Appliance Steuerung oder das Smart Device können beispielsweise zumindest teilweise basierend auf den jeweiligen Positions- und/oder Orientierungsinformation, sowie optional basierend auf den weiteren erfassten Informationen einen konzentrierten Einsatz der jeweiligen Reinigungsgeräte ermöglichen. Eine entsprechende Steuerungsinformation zur beschleunigten und optimierten Reinigung eines überwachten Reinigungs- und/oder Pflegebereiches im Haushalt durch Vermeidung von Reinigungs- und/oder Pflegeprozeduren in bereits gereinigten und/oder gepflegten Reinigungs- und/oder Pflegebereichen, bzw. durch einen Einsatz von mehreren Reinigungsgeräten gleichzeitig in größeren und/oder stärker verschmutzten Reinigungs- und/oder Pflegebereichen im Haushalt kann bestimmt werden. Die bestimmte Steuerungsinformation kann beispielsweise an die jeweiligen Reinigungsgeräte übermittelt werden. Basierend auf der übermittelten Steuerungsinformation können beispielsweise die jeweiligen Reinigungsgeräte eine entsprechende Reinigung und/oder Pflege durchführen.

In einer weiteren beispielhaften Ausgestaltung der Erfindung nach allen Aspekten, beispielsweise ein System, kann beispielsweise ein Reinigungsgerät eine Energiestatusinformation indikativ für einen Energiestatus des Reinigungsgerätes an eine zentral im Haushalt installierte Home Appliance Steuerung (z. B. ein Desktop Computer, eine zentrale Steuereinheit, ein Server, eine Home Automation Anlage), oder ein (z. B. bewegliches) Smart Device (z. B. ein Smartphone, eine Tablet, eine Smartwatch, um einige Beispiele zu nennen) übermitteln. Zumindest teilweise basierend auf der Energiestatusinformation kann beispielsweise die zentral im Haushalt installierte Home Appliance Steuerung oder das Smart Device eine Steuerungsinformation bestimmen, welche zumindest teilweise basierend auf der Energiestatusinformation bestimmt wird. Beispielsweise kann bei der Bestimmung der Steuerungsinformation eine energietechnisch optimierte und beschleunigte Reinigung und/oder Pflege eines seitens der zentral im Haushalt installierten Home Appliance Steuerung oder dem Smart Device berücksichtigt werden, indem beispielsweise bereits gereinigte und/oder gepflegte Bereiche im Haushalt ausgenommen und besonders verschmutzte und/oder pflegebedürftige Bereiche gemeinsam, z. B. von mehreren Reinigungsgeräten bearbeitet werden.

In einer beispielhaften Ausgestaltung der Erfindung nach allen Aspekten können beispielsweise die jeweiligen Reinigungsgeräte (z. B. Roboter und/oder Drohne) unabhängig voneinander eine Markierungsinformation bestimmen, wobei die Markierungsinformation indikativ für einen zu reinigenden und/oder zu pflegenden Bereich im Haushalt ist, welcher anschließend von einem weiteren Reinigungsgerät gereinigt und/oder gepflegt wird. Ein beispielhafter Anwendungsfall ist bei einem zur Neige gehenden Energiestatus des die Markierungsinformation bestimmenden Reinigungsgerätes, oder bei einer nicht oder nicht genügend geeignete Reinigungs- und/oder Pflegeausstattung des Reinigungsgerätes für die Art der Verschmutzung, die sich an dem zu reinigenden und/oder zu pflegenden Bereich im Haushalt vorfindet.

In einer weiteren beispielhaften Ausgestaltung der Erfindung nach allen Aspekten, beispielsweise ein System, können beispielsweise eine oder mehrere von stationär in und rund um einen Reinigungs- und/oder Pflegebereich montierte Überwachungskameras verwendet werden, wobei die Überwachungskameras den Reinigungs- und/oder Pflegebereich erfassen können. Die Überwachungskameras können beispielsweise jeweils über eine drahtlose Kommunikationsschnittstelle verfügen (z. B. WLAN, WAN, Zigbee, Bluetooth, um einige Beispiele zu nennen). Über die drahtlose Kommunikationsschnittstelle können beispielsweise von den jeweiligen Überwachungskameras erfasste Informationen (z. B. erfasste Bildinformationen) an eine zentral im Haushalt installierte Home Appliance Steuerung (z. B. ein Desktop Computer, eine zentrale Steuereinheit, ein Server, eine Home Automation Anlage), oder ein (z. B. bewegliches) Smart Device (z. B. ein Smartphone, eine Tablet, eine Smartwatch, um einige Beispiele zu nennen) übermittelt werden. Die Home Appliance Steuerung oder das Smart Device können beispielsweise zumindest teilweise basierend auf den von der einen oder mehreren Überwachungskameras erfassten Informationen über einen Algorithmus eine Erkennung einzelner Reinigungsgeräte (z. B. Roboter und/oder Drohnen), und/oder eine Bestimmung einer Positions- und/oder Orientierungsinformation in Bezug auf die jeweiligen Reinigungsgeräte durchführen.

In einer weiteren beispielhaften Ausgestaltung der Erfindung nach allen Aspekten, beispielsweise ein System, kann eine zentral im Haushalt installierte Home Appliance Steuerung (z. B. ein Desktop Computer, eine zentrale Steuereinheit, ein Server, eine Home Automation Anlage), oder ein (z. B. bewegliches) Smart Device (z. B. ein Smartphone, eine Tablet, eine Smartwatch, um einige Beispiele zu nennen) über einen Algorithmus beispielsweise die Steuerungsinformation zumindest teilweise basierend auf einer optimierten Planung eines Bewegungsmusters eines Reinigungsgerätes (z. B. Roboter und/oder Drohne), ein sogenanntes "Path-Planning" nach der Art des "traveling salesman" Problems, bestimmt werden. Entsprechend kann beispielsweise in Bezug auf eine aufzuwendende Energie des Reinigungsgerätes und/oder eine benötigte Zeit des Reinigungsgerätes eine optimierte Bedeckung eines zu reinigenden und/oder zu pflegenden Bereichs im Haushalt durch die Summe der zur entsprechenden Reinigung und/oder Pflege eingesetzten Reinigungsgeräte erreicht werden.

In einer weiteren beispielhaften Ausgestaltung der Erfindung nach allen Aspekten, beispielsweise ein System, kann beispielsweise eine zentral im Haushalt installierte Home Appliance Steuerung (z. B. ein Desktop Computer, eine zentrale Steuereinheit, ein Server, eine Home Automation Anlage), oder ein (z. B. bewegliches) Smart Device (z. B. ein Smartphone, eine Tablet, eine Smartwatch, um einige Beispiele zu nennen) über eine Schnittstelle (z. B. LTE, 3G, GPRS, Ethernet, um einige Beispiele zu nennen) mit einer Cloud verbunden werden. Statusinformationen können über die Cloud beispielsweise an eine vordefinierte Adressierungsinformation (z. B. Telefonnummer, SMS, Email, WhatsApp, Skype, um einige Beispiele zu nennen) übermittelt werden. Derart kann beispielsweise ein Benutzer über den Fortschritt, Abbruch, Abschluss, Start oder einen weiteren Status eines Reinigungsvorgangs (z. B: Fensterreinigung, Bodenreinigung, Poolreinigung, oder eine Kombination hiervon) oder einen Pflegevorgang (z. B. Rasen mähen) informiert werden. Derartige Statusinformationen können beispielsweise von der zentral im Haushalt installierten Home Appliance Steuerung, und/oder direkt von einem (z. B. beweglichen) Smart Device abgefragt werden. Die Abfrage der Statusinformationen kann beispielsweise auf eine Anfrage eines Benutzers hin (z. B. mittels einer Benutzereingabe) erfolgen. Zusätzlich oder alternativ können die zentral im Haushalt installierte Home Appliance Steuerung, und/oder das Smart Device die Statusinformationen automatisch abfragen. Die abgefragten Statusinformationen, insbesondere aktuelle Statusinformationen können beispielsweise abgespeichert werden, z. B. in einer Datenbank, auf die die zentral im Haushalt installierte Home Appliance Steuerung und/oder das Smart Device Zugriff haben (z. B. über eine Kommunikationsverbindung).

Das Bestimmen der Steuerungsinformation kann beispielsweise in einer zentral im Haushalt installierte Home Appliance Steuerung (z. B. ein Desktop Computer, eine zentrale Steuereinheit, ein Server, eine Home Automation Anlage), oder in einem (z. B. bewegliches) Smart Device (z. B. ein Smartphone, eine Tablet, eine Smartwatch, um einige Beispiele zu nennen) erfolgen. Alle Reinigungsgeräte können in diesem Fall mit der zentral im Haushalt installierten Home Appliance Steuerung oder dem Smart Device kommunizieren, beispielsweise über eine bidirektionale drahtlose Kommunikation. Die zentral im Haushalt installierten Home Appliance Steuerung oder das Smart Device können beispielsweise alle im Haushalt vorhandenen Reinigungsgeräte koordinieren, beispielsweise mittels der bestimmten Steuerungsinformation. Die zentral im Haushalt installierte Home Appliance Steuerung oder das Smart Device agieren als eine Art Master-Device, die Reinigungsgeräte agieren jeweils als eine Art von Slave-Devices. Ist beispielsweise die Rechenleistung der zentral im Haushalt installierten Home Appliance Steuerung oder des Smart Devices begrenzt, kann die notwendige Rechenleistung für den Betrieb der Reinigungsgeräte (als Schwarm) durch eine Verbindung mit einem serverbasierten oder cloudbasierten System hinzugefügt werden. Dies kann beispielsweise erforderlich sein, wenn für einzelne Rechenschritte, wie beispielsweise eine Verarbeitung von Bildinformationen hohe Rechenleistung benötigt wird. Diese muss dann nicht im Haushalt vorgehalten werden, sondern kann bei Bedarf entsprechend angefordert werden und entsprechend zugeschaltet werden.

In einer weiteren beispielhaften Ausgestaltung nach allen Aspekten der Erfindung kann beispielsweise Rechenkapazität lokal von den Reinigungsgeräten vorgehalten werden. Beispielsweise können die jeweiligen Reinigungsgeräte entsprechend einen Prozessor und Speicher umfassen, um einzelne Rechenschritte ausführen zu können. Dies kann beispielsweise relevant sein, wenn keine Verbindung zu einem Server oder einer Cloud verfügbar ist, oder aufgrund räumlicher Gegebenheiten eine Kommunikation mit einem Server oder einer Cloud nicht möglich ist, oder eine Kommunikation zu einem Server oder einer Cloud seitens eines Benutzers nicht gewünscht ist. Zusätzlich kann beispielsweise in einem Schwarm von mindestens zwei Reinigungsgeräten die Rechenleistung auf verschiedene Reinigungsgeräte aufgeteilt werden. Entsprechend muss nicht zwangsläufig jedes Reinigungsgerät über eine entsprechende Ausstattung (z. B. Prozessor und Speicher) verfügen. So können Rechenprozeduren gesplittet, einzelne Rechenschritte parallel seitens mindestens zwei Reinigungsgeräten bestimmt und anschließend wieder zu einem Gesamtergebnis zusammengeführt werden.

Eine beispielhafte Ausgestaltung nach allen Aspekten der Erfindung sieht vor, dass ein Schwarm von mindestens zwei Reinigungsgeräten über zumindest eine Sprachkommunikationsschnittstelle verfügt, mittels welcher Sprachbefehle eines Benutzers direkt über indirekt über eine weitere Vorrichtung (z. B. ein Smartphone oder des sogenannten Gerätes "Echo" des Herstellers Amazon oder dergleichen) an den Schwarm übermittelt werden können. Alternativ werden die Sprachbefehle beispielsweise seitens eines über eine Sprachkommunikationsschnittstelle verfügenden Reinigungsgerätes eingegeben. Der eingegebene Sprachbefehl kann beispielsweise in eine Steuerungsinformation umgesetzt werden , indem das Bestimmen der Steuerungsinformation zumindest teilweise basierend auf dem eingegebenen Sprachbefehl erfolgt bzw. durchgeführt wird. Entsprechend kann der gesamte Schwarm oder alternativ ein Teil des Schwarms mittels des Sprachbefehls des Nutzers gesteuert werden. Beispielsweise können auf Basis eines von dem Benutzer eingegebenen Sprachbefehls Teile eines zu reinigenden und/oder zu pflegenden Ortes oder Bereichs im Haushalt (z. B. Küche) gereinigt und/oder gepflegt werden, wobei beispielsweise zu der entsprechenden Reinigung und/oder Pflege nicht die gesamte Kapazität des Schwarms von Reinigungsgeräten verwendet werden soll bzw. verwendet werden muss. Eine oder mehrere Sprachbefehle können beispielsweise mit der "Inventory"-Liste assoziiert sein (z. B. Sprachbefehl: "Reinige Fenster Süd-Seite!"). Über eine Positions- und/oder Orientierungsinformation von jeweiligen Reinigungsgeräten, und optional über eine eindeutige Zuordnung eines Namens für einen zu reinigenden und/oder zu pflegenden Bereich im Haushalt kann eine mit dem Sprachbefehl verknüpfte Aktion unmittelbar durchgeführt bzw. deren Durchführung veranlasst werden.

### Kurze Beschreibung der Figuren

In der Zeichnung zeigt
- Fig. 1: eine schematische Darstellung eines Ausführungsbeispiels eines Systems gemäß dem dritten Aspekt;
- Fig. 2: ein Ablaufdiagramm eines Ausführungsbeispiels eines Verfahrens gemäß dem ersten Aspekt;
- Fig. 3: ein Blockdiagramm eines Ausführungsbeispiels einer Vorrichtung gemäß dem zweiten Aspekt;

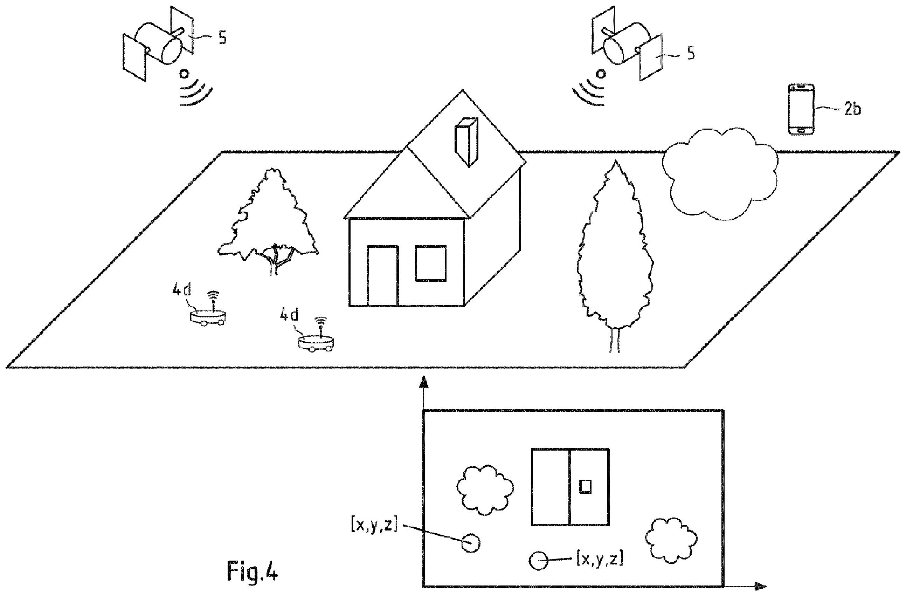

- Fig. 4: eine schematische Darstellung eines weiteren Ausführungsbeispiels eines Systems gemäß dem dritten Aspekt;

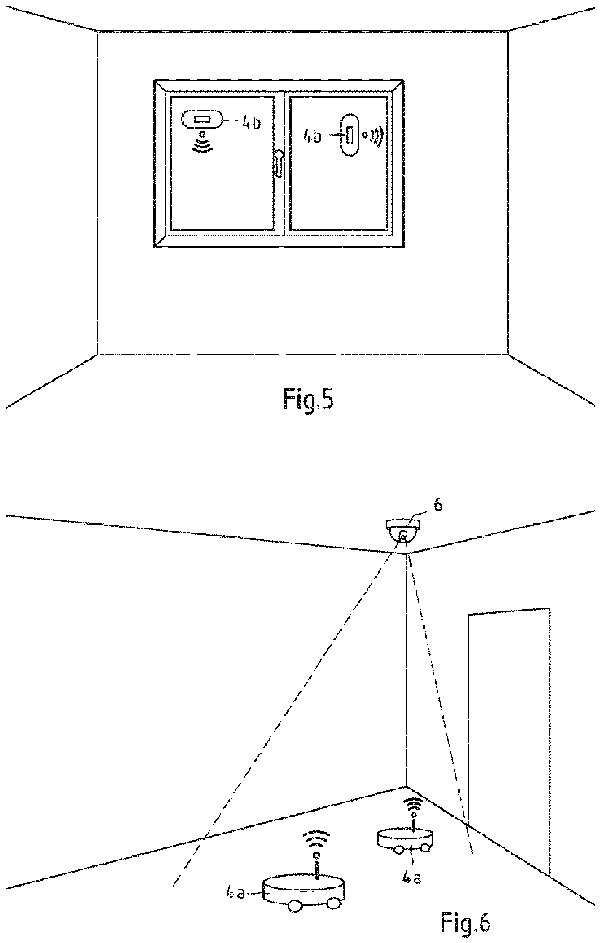

- Fig. 5: eine schematische Darstellung eines weiteren Ausführungsbeispiels eines Systems gemäß dem dritten Aspekt;
- Fig. 6: eine schematische Darstellung eines weiteren Ausführungsbeispiels eines Systems gemäß dem dritten Aspekt;

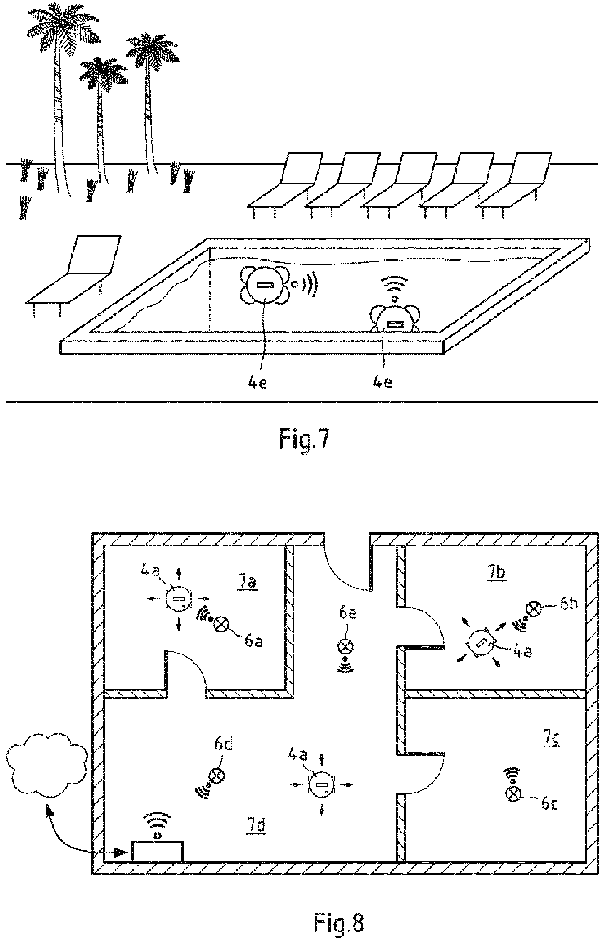

- Fig. 7: eine schematische Darstellung eines weiteren Ausführungsbeispiels eines Systems gemäß dem dritten Aspekt; und
- Fig. 8: eine schematische Darstellung eines weiteren Ausführungsbeispiels eines Systems gemäß dem dritten Aspekt.

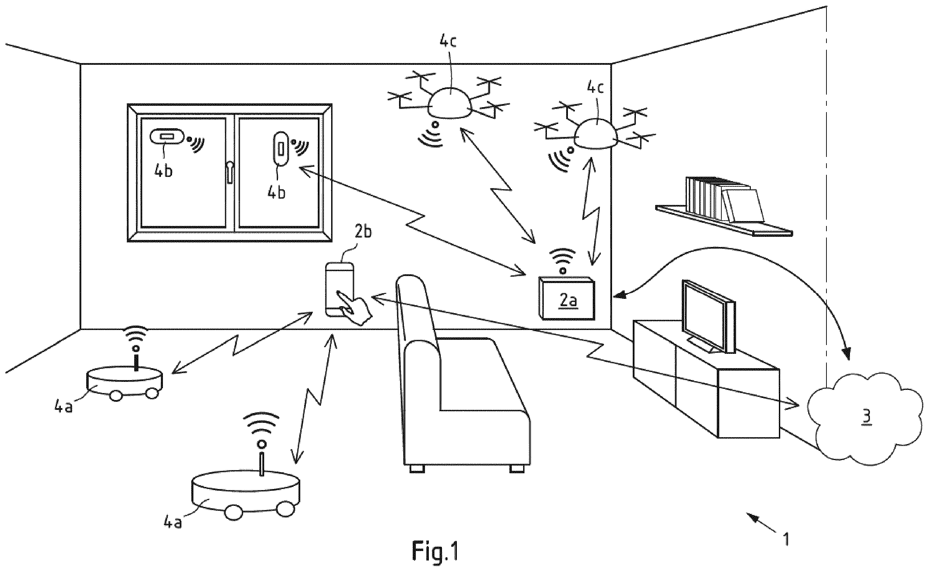

Fig. 1 zeigt ein Ausführungsbeispiel von Vorrichtungen gemäß dem zweiten Aspekt bzw. eines Systems 1 gemäß dem dritten Aspekt.

Das System 1 umfasst mehrere Reinigungsgeräte, vorliegend zwei Bodenroboter 4a, zwei Fensterroboter 4b, und zwei Flugroboter 4c. Das System 1 umfasst ferner eine Verarbeitungseinheit, vorliegend ein Server 2a, welcher alternativ auch als Server Cloud 3 (z. B. eine Vielzahl von Servern welche z. B. über das Internet miteinander verbunden sind und welche zumindest teilweise gemeinsam einen Dienst bereitstellen) ausgebildet sein kann. Alternativ oder zusätzlich kann die Verarbeitungseinheit ein Smart Device 2b, zum Beispiel ein Smartphone, Tablet, ThinClient oder dergleichen, hier vorliegend ein Smartphone sein.

Gemäß einem beispielhaften Ausführungsbeispiel kann seitens der Reinigungsgeräte 4a bis 4c jeweils eine Positions- und/oder Orientierungsinformation erfasst werden, welche jeweils anschließend beispielsweise der Verarbeitungseinheit 2a oder 2b bereitgestellt werden. Die Übertragung der Positions- und/oder Orientierungsinformation kann beispielsweise über eine drahtlose Kommunikationsverbindung, z. B. basierend auf einer Mobilfunkkommunikation, einem WAN (Wide Area Network z.B. LoRa oder Sigfox) oder auf einer WLAN (Wireless Local Area Network) Kommunikation, erfolgen. Entsprechend weisen vorliegend sowohl die Reinigungsgeräte 4a bis 4c als auch die Verarbeitungseinheit 2a oder 2b eine entsprechend ausgebildete Kommunikationsschnittstelle auf.

Beispielsweise kann seitens eines der Reinigungsgeräte 4a bis 4c eine Verschmutzungsinformation erfasst werden, welche anschließend beispielsweise der Verarbeitungseinheit 2a oder 2b bereitgestellt wird.

Nach dem Erhalt zumindest einer erfassten Positions- und/oder Orientierungsinformation und einer erfassten Verschmutzungsinformation kann beispielsweise die Verarbeitungseinheit 2a oder 2b eine Steuerungsinformation bestimmen, wobei die Steuerungsinformation zumindest teilweise basierend auf den erfassten Informationen bestimmt wird.

Die Reinigungsgeräte 4a bis 4c können beispielsweise dazu ausgebildet sein, eine bestimmte Steuerungsinformation zu empfangen. Entsprechend kann eine seitens der Verarbeitungseinheit 2a oder 2b ausgegebene Steuerungsinformation von den jeweiligen Reinigungsgeräten 4a bis 4c empfangen werden. Basierend auf der empfangenen Steuerungsinformation können die jeweiligen Reinigungsgeräte 4a bis 4c eine Aktion, insbesondere automatisch durchführen. Die Aktion kann insbesondere die Reinigung und/oder Pflege zur Beseitigung einer Verschmutzung umfassen.

Weitere Merkmale des in der Fig. 1 dargestellten Systems werden nachfolgend in dem "Ausführungsbeispiel 1" erläutert.

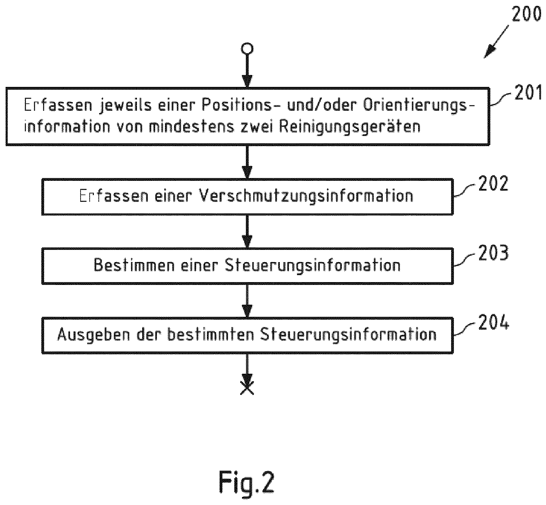

Fig. 2 zeigt ein Ablaufdiagramm 200 eines Ausführungsbeispiels eines Verfahrens gemäß dem ersten Aspekt.

In einem ersten Schritt 201 erfolgt ein Erfassen von jeweils einer Positions- und/oder Orientierungsinformation von mindestens zwei Reinigungsgeräten, z. B. seitens der jeweiligen Reinigungsgeräte 4a bis 4c nach Fig. 1, wobei die Positions- und/oder Orientierungsinformation indikativ für eine Position und/oder Orientierung eines Reinigungsgerätes in einem zu reinigenden und/oder zu pflegenden Bereich, z. B. der Raum nach Fig. 1, ist. Die Positions- und/oder Orientierungsinformation eines jeweiligen Reinigungsgerätes repräsentiert beispielsweise die Position der zwei Bodenroboter 4a, der zwei Fensterroboter 4b, und/oder der zwei Flugroboter (Drohnen) 4c nach Fig. 1.

In einem zweiten Schritt 202 erfolgt ein Erfassen einer Verschmutzungsinformation z. B. seitens der jeweiligen Reinigungsgeräte 4a bis 4c nach Fig. 1 oder aber seitens einer in dem Raum nach Fig. 1 angeordneten Kamera (nicht dargestellt), wobei die Verschmutzungsinformation indikativ für einen zu reinigenden und/oder zu pflegenden Ort oder Bereich, z. B. eine Verschmutzung, innerhalb des zu reinigenden und/oder zu pflegenden Bereiches ist. Die Verschmutzungsinformation repräsentiert beispielsweise eine Verschmutzung des Bodens in einem Raum, welche von einem der zwei Bodenroboter 4a nach Fig. 1 beseitigt werden soll.

In einem dritten Schritt 203 erfolgt ein Bestimmen einer Steuerungsinformation, z. B. seitens der Verarbeitungseinheit 2a oder 2b nach Fig. 1, zumindest teilweise basierend auf den erfassten Positions- und/oder Orientierungsinformationen und auf der erfassten Verschmutzungsinformation. Die bestimmte Steuerungsinformation repräsentiert dabei beispielsweise den Ort (Position) einer festgestellten Verschmutzung, z. B. am Boden, welche an ein bestimmtes Reinigungsgerät, z. B. einem der zwei Bodenroboter 4a nach Fig. 1 übermittelt wird, worauf hin der ausgewählte Bodenroboter 4a die Verschmutzung vom Boden beseitigt.

In einem vierten Schritt 204 erfolgt ein Ausgeben oder Veranlassen des Ausgebens der bestimmten Steuerungsinformation, z. B. seitens der Verarbeitungseinheit 2a oder 2b nach Fig. 1.

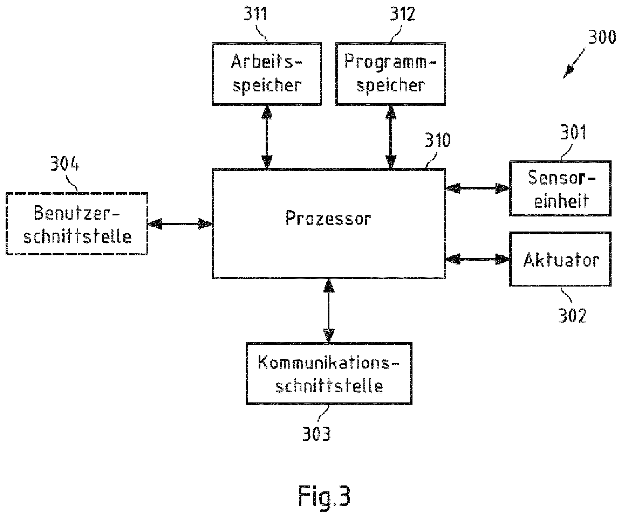

Fig. 3 zeigt ein Blockdiagramm eines Ausführungsbeispiels einer Vorrichtung 300, welche insbesondere ein beispielhaftes Verfahren gemäß dem ersten Aspekt ausführen kann. Die Vorrichtung 300 ist beispielsweise eine Vorrichtung gemäß dem zweiten oder ein System gemäß dem dritten Aspekt. Beispielsweise ist die Vorrichtung ein Reinigungsgerät (z. B. ein Roboter und/oder eine Drohne) oder eine Verarbeitungseinheit (z. B. eine zentral im Haushalt angeordnete Home Appliance Steuerung, oder ein (bewegliches) Smart Device (z. B. ein Smartphone, Tablet, Smartwatch) oder dergleichen).

Die Vorrichtung 300 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen. Die Vorrichtung 300 kann weiterhin an einem Reinigungsgerät anordenbar sein, wobei beispielsweise die Vorrichtung 300 derart an einem Reinigungsgerät anordenbar ist, dass eine Steuerung bzw. Regelung von Funktionen des Reinigungsgerätes mit der Vorrichtung 300 möglich ist. Hierzu ist die Vorrichtung 300 beispielsweise über eine drahtgebundene und/oder eine drahtlose Kommunikationsverbindung mit einer Verarbeitungseinheit verbindbar, insofern die Vorrichtung nicht selber die Verarbeitungseinheit ist.

Der Prozessor 310 der Vorrichtung 300 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Der Prozessor 310 führt Programmanweisungen aus, die in Programmspeicher 312 gespeichert sind, und speichert beispielsweise Zwischenergebnisse oder ähnliches in Arbeits- oder Hauptspeicher 311. Zum Beispiel ist Programmspeicher 312 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 311 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Programmspeicher 312 ist vorzugsweise ein lokaler mit der Vorrichtung 300 fest verbundener Datenträger. Mit der Vorrichtung 300 fest verbundene Datenträger sind beispielsweise Festplatten, die in die Vorrichtung 300 eingebaut sind. Alternativ kann der Datenträger beispielsweise auch ein mit der Vorrichtung 300 trennbar verbindbarer Datenträger sein wie ein Speicher-Stick, ein Wechseldatenträger, eine tragbare Festplatte, eine CD, eine DVD und/oder eine Diskette.

Der Programmspeicher 312 enthält beispielsweise das Betriebssystem von der Vorrichtung 300, das beim Starten der Vorrichtung 300 zumindest teilweise in Hauptspeicher 311 geladen und vom Prozessor 310 ausgeführt wird. Insbesondere wird beim Starten von Vorrichtung 300 zumindest ein Teil des Kerns des Betriebssystems in den Hauptspeicher 311 geladen und von Prozessor 310 ausgeführt. Das Betriebssystem von Vorrichtung 300 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 300 zur Datenverarbeitung. Es verwaltet beispielsweise Betriebsmittel wie Hauptspeicher 311 und Programmspeicher 312, optionale Netzwerkschnittstelle, Ein- und Ausgabegerät, z. B. die optionale Benutzerschnittstelle 304, stellt unter anderem durch Programmierschnittstellen anderen Programmen grundlegende Funktionen zur Verfügung und steuert die Ausführung von Programmen.

Der Prozessor 310 steuert die Kommunikationsschnittstelle 303, welche beispielsweise eine Netzwerkschnittstelle sein kann und als Netzwerkkarte, Netzwerkmodul und/oder Modem ausgebildet sein kann. Die Kommunikationsschnittstelle 303 ist insbesondere dazu eingerichtet, eine Verbindung der Vorrichtung 300 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 303 kann beispielsweise Daten (über das Kommunikationssystem) empfangen und an Prozessor 310 weiterleiten und/oder Daten von Prozessor 310 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann der Prozessor 310 zumindest eine optionale Benutzerschnittstelle 304 steuern. Ein-/Ausgabegerät 314 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Die optionale Benutzerschnittstelle 304 kann beispielsweise Eingaben eines Benutzers aufnehmen und an Prozessor 310 weiterleiten und/oder Informationen für den Benutzer von Prozessor 310 empfangen und ausgeben.

Die Vorrichtung 300 umfasst ferner eine Sensoreinheit 301, einen Aktuator 302 und eine Kommunikationsschnittstelle 304. Die Sensoreinheit 301 kann beispielsweise einen entsprechenden Sensor zur Erfassung der Positions- und/oder Orientierungsinformation und/oder zur Erfassung einer Verschmutzungsinformation aufweisen. Der Aktuator 302 kann beispielsweise ein Reinigungsmittel der Vorrichtung 300 betätigen.

## Patentansprüche

1. Verfahren, umfassend:
- Erfassen von jeweils einer Positions- und/oder Orientierungsinformation von mindestens zwei Reinigungsgeräten (4a-4c), wobei die Positions- und/oder Orientierungsinformation indikativ für eine Position und/oder Orientierung eines Reinigungsgerätes (4a-4c) in einem zu reinigenden und/oder zu pflegenden Bereich ist;
- Erfassen einer Verschmutzungsinformation, wobei die Verschmutzungsinformation indikativ für einen zu reinigenden und/oder zu pflegenden Ort oder Bereich innerhalb des zu reinigenden und/oder zu pflegenden Bereiches ist;
- Bestimmen einer Steuerungsinformation zumindest teilweise basierend auf den erfassten Positions- und/oder Orientierungsinformationen und auf der erfassten Verschmutzungsinformation;
- Ausgeben oder Veranlassen des Ausgebens der bestimmten Steuerungsinformation,
wobei die Steuerungsinformation ferner basierend auf einer bestimmten Planungsinformation bestimmt wird, wobei die Planungsinformation indikativ für prädizierte zu reinigenden bzw. zu pflegenden Orte oder Bereiche ist,
wobei das Verfahren dadurch charakterisiert ist, dass die Planungsinformation basierend auf zumindest einem der folgenden Parameter bestimmt wird:
(i) Reinigungsleistung des jeweiligen Reinigungsgerätes (4a-4c);
(ii) Materialverbrauch des jeweiligen Reinigungsgerätes (4a-4c);
(iii) benötigte Zeit des jeweiligen Reinigungsgerätes (4a-4c) zur Reinigung und/oder Pflege des zu reinigenden und/oder zu pflegenden Ortes oder Bereiches innerhalb des zu reinigenden und/oder zu pflegenden Bereiches;
(iv) Energieverbrauch des jeweiligen Reinigungsgerätes (4a-4c);
(v) Verschleiß des jeweiligen Reinigungsgerätes (4a-4c);
(vi) Geräuschentwicklung des jeweiligen Reinigungsgerätes (4a-4c);
(vii) oder eine Kombination hiervon.

2. Verfahren nach Anspruch 1, wobei zumindest teilweise basierend auf der Steuerungsinformation zumindest eines der mindestens zwei Reinigungsgeräte (4a-4c) eine Reinigung und/oder Pflege des Ortes oder des Bereiches durchführt.

3. Verfahren nach einem der vorhergehenden Ansprüche, wobei das Bestimmen der Steuerungsinformation mittels einer Verarbeitungseinheit (2a, 2b) durchgeführt und/oder gesteuert wird.

4. Verfahren nach einem der vorhergehenden Ansprüche, wobei die bestimmte Steuerungsinformation über eine Kommunikationsschnittstelle (303, 304) ausgegeben bzw. deren Ausgabe veranlasst wird.

5. Verfahren nach einem der vorhergehenden Ansprüche, wobei die Verschmutzungsinformation von einem der mindestens zwei Reinigungsgeräte (4a-4c) erfasst wird.

6. Verfahren nach einem der vorhergehenden Ansprüche, wobei der zu reinigenden und/oder zu pflegenden Ort oder Bereich innerhalb des zu reinigenden und/oder zu pflegenden Bereiches eine Oberfläche in einem Haus oder in einem Garten ist.

7. Verfahren nach einem der vorhergehenden Ansprüche, wobei zumindest das Bestimmen der Steuerungsinformation mittels einer Verarbeitungseinheit (2a, 2b) durchgeführt und/oder gesteuert wird, wobei die Verarbeitungseinheit (2a, 2b) insbesondere zentral im Haushalt oder dezentral angeordnet ist.

8. Verfahren nach einem der vorhergehenden Ansprüche, wobei die Positions- und/oder Orientierungsinformation mittels einer Kamera oder mittels eines Sensors erfasst wird.

9. Verfahren nach Anspruch 8, wobei die Kamera derart angeordnet ist, dass mittels der Kamera der zu reinigenden und/oder zu pflegenden Bereich erfasst wird, wobei zumindest teilweise basierend auf von der Kamera erfassten Informationen das Bestimmen der Positions- und/oder Orientierungsinformation der mindestens zwei Reinigungsgeräte (4a-4c) und/oder das Erfassen der Verschmutzungsinformation durchgeführt und/oder gesteuert wird.

10. Verfahren nach einem der vorhergehenden Ansprüche, wobei die Positions- und/oder Orientierungsinformation zumindest teilweise basierend auf von einem Sensor von einem der mindestens zwei Reinigungsgeräte (4a-4c) erfassten Informationen bestimmt wird.

11. Verfahren nach einem der vorhergehenden Ansprüche, ferner umfassend:
- Erhalten einer Statusinformation von zumindest einem der mindestens zwei Reinigungsgeräte (4a-4c);
- Ausgeben oder Veranlassen des Ausgebens der Statusinformation.

12. Verfahren nach einem der vorhergehenden Ansprüche, ferner umfassend:
- Erfassen von zumindest einem Sprachbefehl indikativ für zumindest einen Parameter, auf dessen Basis die Steuerungsinformation bestimmt wird;
- Bestimmen der Steuerungsinformation zumindest teilweise basierend auf dem erfassten zumindest einen Sprachbefehl.

13. Vorrichtung (300), welche dazu eingerichtet ist oder entsprechende Mittel umfasst, ein Verfahren nach einem der vorhergehenden Ansprüche durchzuführen und/oder zu steuern.

14. System (1), umfassend:
- mehrere Vorrichtungen (300), insbesondere mindestens eine Verarbeitungseinheit (2a, 2b) und mindestens zwei Reinigungsgeräte (4a-4c), welche zusammen ein Verfahren nach einem der vorhergehenden Verfahrensansprüche durchführen.

## Claims

1. A method, comprising:
- capturing in each case position information and/or orientation information of at least two cleaning appliances (4a-4c), the position information and/or orientation information being indicative of a position and/or orientation of a cleaning appliance (4a-4c) in a region to be cleaned and/or maintained;
- capturing soiling information, the soiling information being indicative of a location or region to be cleaned and/or maintained within the region to be cleaned and/or maintained;
- determining control information based at least in part on the captured position information and/or orientation information and on the captured soiling information;
- outputting or triggering the output of the determined control information,
the control information further being determined based on determined planning information, the planning information being indicative of predicted locations or regions to be cleaned or maintained,
the method being **characterized in that,** the planning information is determined based on at least one of the following parameters:
(i) cleaning performance of the relevant cleaning appliance (4a-4c);
(ii) material consumption of the relevant cleaning appliance (4a-4c);
(iii) required time of the relevant cleaning appliance (4a-4c) for the cleaning and/or maintenance of the location or region to be cleaned and/or maintained within the region to be cleaned and/or maintained;
(iv) energy consumption of the relevant cleaning appliance (4a-4c);
(v) wear of the relevant cleaning appliance (4a-4c);
(vi) noise generation of the relevant cleaning appliance (4a-4c);
(vii) or a combination thereof.

2. The method according to claim 1, wherein at least one of the at least two cleaning appliances (4a-4c) carries out cleaning and/or maintenance of the location or region based on the control information.

3. The method according to one of the preceding claims, wherein the determination of the control information is carried out and/or controlled by means of a processing unit (2a, 2b).

4. The method according to one of the preceding claims, wherein the determined control information is output via a communication interface (303, 304) or the output thereof is triggered.

5. The method according to one of the preceding claims, wherein the soiling information is captured by one of the at least two cleaning appliances (4a-4c).

6. The method according to one of the preceding claims, wherein the location or region to be cleaned and/or maintained within the region to be cleaned and/or maintained is a surface in a house or in a garden.

7. The method according to one of the preceding claims, wherein at least the determination of the control information is carried out and/or controlled by means of a processing unit (2a, 2b), wherein the processing unit (2a, 2b) is arranged in particular centrally in the household or in a decentralized manner.

8. The method according to one of the preceding claims, wherein the position information and/or orientation information is captured by means of a camera or by means of a sensor.

9. The method according to claim 8, wherein the camera is arranged in such a way that the region to be cleaned and/or maintained is captured by means of the camera, wherein the determination of the position information and/or orientation information of the at least two cleaning appliances (4a-4c) and/or the capture of the soiling information is carried out and/or controlled based at least in part on information captured by the camera.

10. The method according to one of the preceding claims, wherein the position information and/or orientation information is determined based at least in part on information captured by a sensor of one of the at least two cleaning appliances (4a-4c).

11. The method according to one of the preceding claims, the method further comprising:
- obtaining status information from at least one of the at least two cleaning appliances (4a-4c);
- outputting or triggering the output of the status information.

12. The method according to one of the preceding claims, the method further comprising:
- capturing at least one voice command indicative of at least one parameter on the basis of which the control information is determined;
- determining the control information based at least in part on the captured at least one voice command.

13. A device (300) that is designed or comprises corresponding means for carrying out and/or controlling a method according to one of the preceding claims.

14. A system (1), comprising:
- a plurality of devices (300), in particular at least one processing unit (2a, 2b) and at least two cleaning appliances (4a-4c), which together carry out a method according to one of the preceding method claims.

## Revendications

1. Procédé, comprenant :
- la collecte de respectivement des informations de position et/ou d'orientation d'au moins deux appareils de nettoyage (4a-4c), les informations de position et/ou d'orientation indiquant une position et/ou une orientation d'un appareil de nettoyage (4a-4c) dans une zone à nettoyer et/ou à entretenir ;
- la collecte d'informations d'encrassement, les informations d'encrassement indiquant un site ou une zone à nettoyer et/ou à entretenir à l'intérieur de la zone à nettoyer et/ou à entretenir ;
- la détermination d'informations de commande au moins partiellement sur la base des informations de position et/ou d'orientation collectées et des informations d'encrassement collectées ;
- l'émission ou l'incitation à l'émission des informations de commande déterm inées,
les informations de commande étant en outre déterminées sur la base d'informations de planification déterminées, les informations de planification indiquant des sites ou des zones prédits à nettoyer ou à entretenir,
le procédé étant **caractérisé en ce que** les informations de planification sont déterminées sur la base d'au moins l'un des paramètres suivants :
(i) la performance de nettoyage de l'appareil de nettoyage (4a-4c) respectif ;
(i) la consommation de matière de l'appareil de nettoyage (4a-4c) respectif ;
(iii) le temps nécessaire à l'appareil de nettoyage (4a-4c) respectif pour le nettoyage et/ou l'entretien du site ou de la zone à nettoyer et/ou à entretenir à l'intérieur de la zone à nettoyer et/ou à entretenir ;
(iv) la consommation d'énergie de l'appareil de nettoyage (4a-4c) respectif ;
(i) l'usure de l'appareil de nettoyage (4a-4c) respectif ;
(i) la génération de bruit de l'appareil de nettoyage (4a-4c) respectif ;
(vii) ou une combinaison de ceux-ci.

2. Procédé selon la revendication 1, dans lequel, au moins partiellement sur la base des informations de commande, au moins l'un des au moins deux appareils de nettoyage (4a-4c) effectue un nettoyage et/ou un entretien du site ou de la zone.

3. Procédé selon l'une quelconque des revendications précédentes, dans lequel la détermination des informations de commande est effectuée et/ou commandée à l'aide d'une unité de traitement (2a, 2b).

4. Procédé selon l'une quelconque des revendications précédentes, dans lequel les informations de commande déterminées sont émises ou sont incitées à être émises par l'intermédiaire d'une interface de communication (303, 304).

5. Procédé selon l'une quelconque des revendications précédentes, dans lequel les informations d'encrassement sont collectées par l'un des au moins deux appareils de nettoyage (4a-4c).

6. Procédé selon l'une quelconque des revendications précédentes, dans lequel le site ou la zone à nettoyer et/ou à entretenir à l'intérieur de la zone à nettoyer et/ou à entretenir est une surface dans une maison ou dans un jardin.

7. Procédé selon l'une quelconque des revendications précédentes, dans lequel au moins la détermination des informations de commande est effectuée et/ou commandée à l'aide d'une unité de traitement (2a, 2b), l'unité de traitement (2a, 2b) étant disposée en particulier de façon centrée dans le foyer ou de façon excentrée.

8. Procédé selon l'une quelconque des revendications précédentes, dans lequel les informations de position et/ou d'orientation sont collectées à l'aide d'une caméra ou à l'aide d'un capteur.

9. Procédé selon la revendication 8, dans lequel la caméra est disposée de telle sorte que la zone à nettoyer et/ou à entretenir est détectée à l'aide de la caméra, la détermination des informations de position et/ou d'orientation des au moins deux appareils de nettoyage (4a-4c) et/ou la collecte des informations d'encrassement étant effectuées et/ou commandées au moins partiellement sur la base d'informations collectées par la caméra.

10. Procédé selon l'une quelconque des revendications précédentes, dans lequel les informations de position et/ou d'orientation sont déterminées au moins partiellement sur la base d'informations collectées par un capteur de l'un des au moins deux appareils de nettoyage (4a-4c).

11. Procédé selon l'une quelconque des revendications précédentes, comprenant en outre :
- la réception d'informations d'état d'au moins l'un des au moins deux appareils de nettoyage (4a-4c) ;
- l'émission ou l'incitation à l'émission des informations d'état.

12. Procédé selon l'une quelconque des revendications précédentes, comprenant en outre :
- la détection d'au moins une commande vocale indiquant au moins un paramètre sur la base duquel les informations de commande sont déterminées ;
- la détermination des informations de commande au moins partiellement sur la base de l'au moins une commande vocale détectée.

13. Dispositif (300), lequel est configuré, ou comprend des moyens appropriés, pour effectuer et/ou commander un procédé selon l'une quelconque des revendications précédentes.

14. Système (1), comprenant :
- plusieurs dispositifs (300), en particulier au moins une unité de traitement (2a, 2b) et au moins deux appareils de nettoyage (4a-4c), lesquels effectuent conjointement un procédé selon l'une quelconque des revendications de procédé précédentes.
